# EUROPÄISCHE PATENTSCHRIFT

(11) **EP 2 677 246 B1**
(45) Veröffentlichungstag und Bekanntmachung des Hinweises auf die Patenterteilung: **27.12.2017**
(21) Anmeldenummer: 13003024.0
(22) Anmeldetag: 13.06.2013
(51) Int. Cl.: F24H 1/14, B60H 1/22

(54) **Heizvorrichtung**
Heating device
Dispositif de chauffage

(30) Priorität: 22.06.2012 EP 12004691
(43) Veröffentlichungstag der Anmeldung: 25.12.2013
(73) Patentinhaber: SEKA Schutzbelüftung GmbH, 76829 Landau (DE)
(72) Erfinder: Müller, Stefan, 45739 Oer-Erkenschwick (DE)
(74) Vertreter: Patentanwälte Dr. Keller, Schwertfeger

(56) Entgegenhaltungen:
- EP-A1- 1 354 738
- DE-A1- 4 436 013
- DE-C1- 4 325 434
- US-A1- 2011 069 943
- US-B1- 6 330 395
- US-B1- 6 442 341

## Beschreibung

Die vorliegende Erfindung betrifft eine Heizvorrichtung, insbesondere eine Heizvorrichtung für Vorrichtungen zur Versorgung eines Schutzraumes mit Gas, insbesondere Atemgas, siehe z.B. US 6,442,341 B1. Es ist bekannt, Schutzräume bzw. Kabinen außenluftunabhängig mit Atemluft über Speicherflaschen und Kompressoren zu versorgen. In den Speicherflaschen steht die Atemluft unter sehr hohem Druck. Der zulässige Druck in den Schutzräumen bzw. Kabinen liegt deutlich unter dem in den Speicherflaschen vorherrschenden Druck. Zur Versorgung eines Schutzraumes oder einer Kabine mit Atemluft muss somit der Druck der Atemluft in der Speicherflasche reduziert werden. Hierfür ist ein Druckreduzierventil zwischen der Speicherflasche und dem Schutzraum bzw. der Kabine vorgesehen.

Befinden sich die Schutzräume bzw. Kabinen in Umgebungen mit niedrigen Außentemperaturen, besteht die Gefahr, dass das Druckreduzierventil vereist, wenn das Ventil geöffnet ist. Eine Vereisung des Druckreduzierventils hat zur Folge, dass das Druckreduzierventil nicht mehr zuverlässig arbeitet. Insbesondere ist der Durchfluss durch das Ventil reduziert. Dies bedeutet, dass die Luftzufuhr in den Schutzraum oder die Kabine unter Umständen nicht mehr ausreichend ist. Ferner führen Eispartikel zu einem erhöhten Verschleiß an Dichtungen und damit zu einer verkürzten Lebensdauer der Ventile.

Die Gefahr der Vereisung des Druckreduzierventils wird bereits bei Umgebungstemperaturen deutlich über 0°C beobachtet. Die Ursache der Vereisung der Druckreduzierventile bei Temperaturen über 0°C ist die Tatsache, dass bei einer Abnahme des Druckes des Gases die Temperatur des Gases abnimmt. Somit führt eine Druckreduzierung des Gases am Druckreduzierventil dazu, dass das am Druckreduzierventil entspannte Gas eine niedrigere Temperatur aufweist als das im Druckbehälter enthaltene Gas. Das abgekühlte Gas bewirkt eine Abkühlung der Bauteile, in denen es geführt wird bzw. mit denen es in Kontakt steht. Liegt die Temperatur des Gases nach der Druckreduzierung am Druckreduzierventil unter 0°C, führt dies dazu, dass das Druckreduzierventil ebenfalls auf Temperaturen unter 0°C abgekühlt wird. Die Folge ist, dass die Luftfeuchtigkeit, die sich am Druckreduzierventil niederschlägt bzw. bereits niedergeschlagen hat, gefriert, was zu einer Vereisung des Druckreduzierventils führt. Da sowohl die Umgebungsluft als auch das aus dem Druckbehälter stammende Gas eine gewisse Luftfeuchtigkeit aufweisen, tritt die Vereisung sowohl außerhalb des Druckreduzierventils als auch im Inneren, d.h. im gasführenden Bereich des Druckreduzierventils auf.

Es wurde erkannt, dass es mit Hilfe einer Heizvorrichtung möglich ist, das Gas, das durch den Rohrleitungsabschnitt zwischen Speicherflasche und Druckreduzierventil geführt wird, zu erwärmen. Wenn der Temperaturwert des erwärmten Gases ausreichend hoch ist, vereist das Druckreduzierventil nicht. Mit Hilfe einer Heizvorrichtung wird das aus dem Druckbehälter strömende Gas auf einen Temperaturwert erwärmt, der so hoch ist, dass nach Durchgang des Gases durch das Druckreduzierventil das dann entspannte Gas einen Wert aufweist, bei dem das Druckreduzierventil nicht vereist. Vorzugsweise liegt der Temperaturwert des entspannten Gases über 0°C.

Zur Vermeidung der Vereisung des Druckreduzierventils wurde beispielsweise Heißluft auf die Ventile geblasen. Das Anblasen der Ventile mit heißer Luft hat in aggressiver Atmosphäre jedoch eine erhöhte Korrosion von Anlagenbauteilen zur Folge. Weiterhin ist das Blasen von Heißluft auf Ventile sehr unkontrolliert. Das Risiko von Bränden ist sehr hoch.

Es ist Aufgabe der vorliegenden Erfindung, eine Heizvorrichtung bereitzustellen, die die Vereisung des Druckreduzierventils verhindert, wenn das Druckreduzierventil bei niedrigen Umgebungstemperaturen geöffnet wird, und die die oben genannten Nachteile und Risiken überwindet. Insbesondere ist es Aufgabe der Erfindung eine Heizvorrichtung bereitzustellen, die sicher und einfach herstellbar ist und die insbesondere für den Einsatz in Vorrichtungen zur Versorgung eines Schutzraumes mit Atemluft geeignet ist.

Erfindungsgemäß wird die oben genannte Aufgabe durch eine Heizvorrichtung gelöst, umfassend einen wärmeleitfähigen, im Wesentlichen plattenförmigen Block mit zwei getrennt voneinander angeordneten Durchgängen durch den Block, wobei jeder Durchgang die Form einer Längsbohrung mit zwei Öffnungen aufweist, ein gebogenes Rohrelement mit zwei Schenkeln, die im Wesentlichen in die gleiche Richtung weisen, wobei jeder Schenkel in einem Durchgang angeordnet ist, und wenigstens ein Heizelement, das auf der Oberfläche des plattenförmigen Blocks angeordnet ist.

Bei der erfindungsgemäßen Heizvorrichtung wird das durch das Rohrelement hindurchströmende Gas kontrolliert erwärmt. Eine Erwärmung und somit die Gefahr einer Überhitzung von Anlagenbauteilen oder der umgebenden Luft wird im Vergleich zu bisher bekannten Verfahren deutlich verringert. Somit ist mit Hilfe der erfindungsgemäßen Heizvorrichtung das Risiko eines Brandes deutlich reduziert.

Darüber hinaus ist die Heizvorrichtung einfach herstellbar: So werden zur Montage der Heizvorrichtung aus den einzelnen Bauteilen im Wesentlichen nur zwei Arbeitsschritte benötigt. In einem ersten Arbeitsschritt werden die beiden Schenkel jeweils in die Durchgänge eingeführt und in einem zweiten Schritt wird das wenigstens eine Heizelement auf dem Block befestigt. Insbesondere der erste Arbeitsschritt gestaltet sich als vergleichsweise einfach, da in der Regel beide Schenkel gleichzeitig in die jeweiligen Durchgänge eingeführt werden können.

Gemäß einer bevorzugten Ausführungsform sind die beiden Durchgänge im Wesentlichen parallel angeordnet. Auf diese Weise lässt sich die Heizvorrichtung einfach montieren, da die beiden Schenkel des gebogenen beispielsweise U-förmigen Rohrelements einfach in die beiden Durchgänge einführbar sind. Besonders einfach lässt sich die Heizvorrichtung montieren, wenn auch die beiden Schenkel im Wesentlichen parallel angeordnet sind.

Hierbei ist es von Vorteil, dass der Außendurchmesser der Schenkel des Rohrelements gleich oder geringfügig kleiner als der Durchmesser der Öffnung ist. Hierdurch ist es möglich, die Schenkel des Rohrelements ohne großen Kraftaufwand einfach in die Durchgänge hineinzuschieben.

Gemäß einer vorteilhaften Ausführungsform ist das Rohrelement druckfest ausgebildet. Aufgrund des unter Druck stehenden Gases, insbesondere Atemgases, ist es aus sicherheitstechnischen Aspekten notwendig, dass die einzelnen Bauelemente, die das unter Druck stehende Gas, insbesondere Atemgas, führen oder mit diesem in Kontakt stehen, druckfest ausgebildet sind. Da das Rohrelement selbst bereits die erforderliche Druckfestigkeit aufweist, bedarf es keiner besonderen Sicherheitsbestimmung mehr für die übrigen Bauteile der Heizvorrichtung hinsichtlich ihrer Druckfestigkeit.

Es ist weiterhin von Vorteil, dass das Rohrelement nahtfrei ist, so dass das Rohrelement keine Schwächung bezüglich der Druckfestigkeit aufweist. Beispielsweise kann das Rohrelement aus Edelstahl hergestellt sein.

Um eine besonders gute, d.h. effektive Wärmeübertragung zwischen den Heizelementen und dem Rohrelement und somit auf das durch das Rohrelement hindurchströmende Gas zu erzielen, ist es von Vorteil, dass der Block aus einem Metall, vorzugsweise aus Aluminium besteht. Ein aus Metall, vorzugsweise aus Aluminium bestehender Block weist eine vergleichsweise gute Wärmeleitfähigkeit auf. Alternativ sind Blöcke beispielsweise aus Kupfer oder Stahl einsetzbar.

Eine weitere Verbesserung der Wärmeübertragung von dem wenigstens einen Heizelement auf das durch das Rohrelement hindurchströmende Gas wird vorzugsweise dadurch erzielt, dass zwischen den Schenkeln des Rohrelements und der Innenwandung des Durchgangs wenigstens abschnittsweise eine Wärmeleitpaste vorgesehen ist.

Als zusätzliche oder alternative Maßnahme zur Verbesserung der Wärmeübertragung zwischen dem wenigstens einen Heizelement und dem durch das Rohrelement hindurchströmende Gas ist es bei einer bevorzugten Ausführungsform vorgesehen, dass im Wesentlichen senkrecht zu wenigstens einem Durchgang wenigstens eine Querbohrung vorgesehen ist, die in den wenigstens einen Durchgang mündet. Durch diesen Durchgang wird beispielsweise eine Madenschraube geführt, die das Rohrelement gegen den Block drückt.

Bei einer bevorzugten Ausführungsform ist das Heizelement ein PTC-Heizelement. PTC-Heizelemente haben den Vorteil, dass sie temperaturbegrenzt sind. Somit besteht bei PTC-Heizelementen nicht die Gefahr, dass diese überhitzen. Dies ist besonders dann von Vorteil, wenn die Heizvorrichtung in einer Umgebung verwendet wird, in der die Gefahr von Explosionen besteht.

Es ist bevorzugt, dass die Heizvorrichtung eine Isolierung aufweist, in der die Heizvorrichtung angeordnet ist. Auf diese Weise lässt sich besonders energiesparend das durch das Rohrelement hindurchströmende Gas erwärmen.

Bevorzugte Ausführungsformen der Erfindung werden anhand der beigefügten Zeichnungen näher beschrieben, in denen zeigen:
- Fig. 1: eine perspektivische Ansicht einer Heizvorrichtung,
- Fig. 2: eine perspektivische Ansicht des Blocks einer Heizvorrichtung,
- Fig. 3a: eine Draufsicht auf den Block,
- Fig. 3b: eine Seitenansicht des Blocks,
- Fig. 3c: eine weitere Seitenansicht des Blocks der Fig. 2,
- Fig. 4: einen Querschnitt durch den Block entlang der Linie B-B der Fig. 3a,
- Fig. 5: einen Querschnitt durch den Block entlang der Linie A-A der Fig. 3a,
- Fig. 6: einen Querschnitt durch den Block entlang der Linie C-C der Fig. 5, und
- Fig. 7: eine schematische Darstellung einer Verwendungsmöglichkeit der Heizvorrichtung.

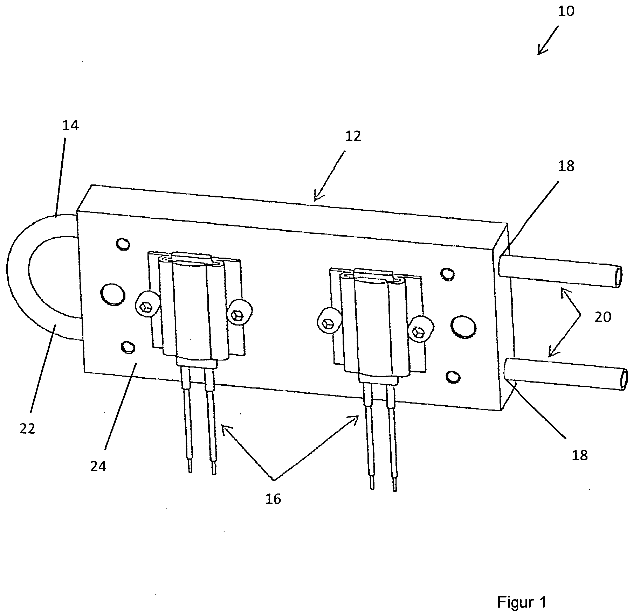

Figur 1 zeigt eine Heizvorrichtung 10, umfassend einen im Wesentlichen plattenförmigen Block 12, ein Rohrelement 14 sowie zwei Heizelemente 16. Der im Wesentlichen plattenförmig ausgebildete Block 12 ist einstückig ausgebildet und besteht aus einem wärmeleitfähigen Material wie etwa einem Metall. Bevorzugt ist hierbei Aluminium.

Der Block 12 weist zwei Durchgänge 18 auf, die parallel zueinander angeordnet sind und sich in Längsrichtung durch den Block erstrecken. Die Durchgänge 18 sind in Art einer Längsbohrung ausgeführt.

Das Rohrelement 14 ist druckfest und weist zwei Schenkel 20 sowie ein U-förmiges Basiselement 22 auf. Die Schenkel 20 und das Basiselement 22 sind einstückig und ohne Naht ausgebildet und bestehen beispielsweise aus Edelstahl. Die Wanddicke des Rohres liegt im Bereich von 1,5 mm.

Die beiden Schenkel 20 des Rohrelements 14 sind in den Durchgängen 18 des Blocks 12 angeordnet.

Der Außendurchmesser der Schenkel 20 des Rohrelements 14 ist gleich dem Innendurchmesser der Durchgänge 18.

Wenn auch nicht dargestellt, so ist bei einer Ausführungsform eine Wärmeleitpaste zwischen den Schenkeln 20 des Rohrelements 14 und der Innenwandung des Durchgangs 18 vorgesehen.

Auf der Oberseite 24 des plattenförmigen Blocks sind die zwei Heizelemente im Abstand voneinander an dem Block 12 befestigt.

Die Heizelemente 16 sind bei der dargestellten Ausführungsform PTC-Heizelemente. Es sind auch nur ein oder mehrere Heizelemente anderer Art einsetzbar.

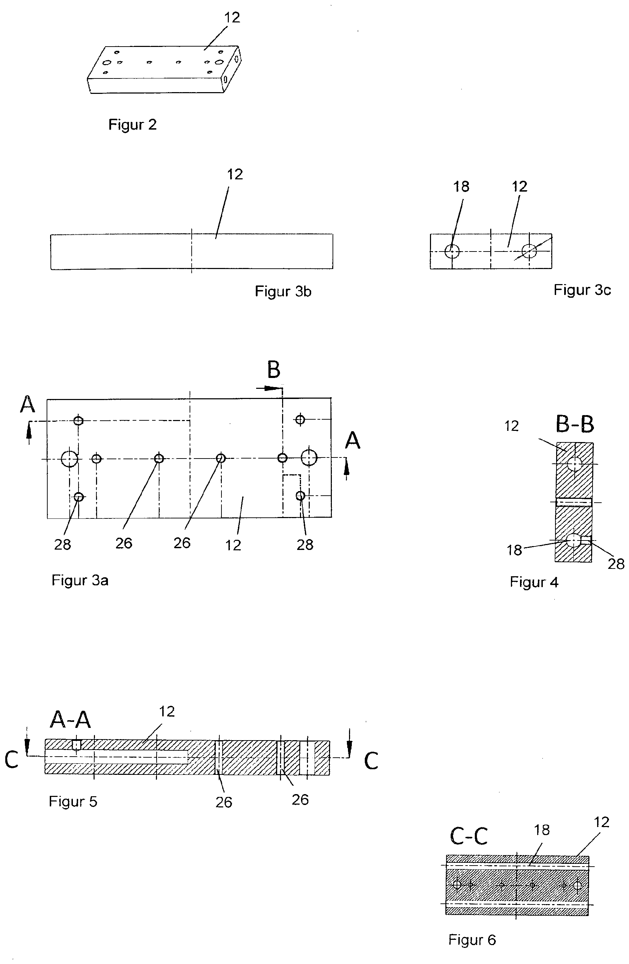

Figur 2 zeigt den Heizblock 12 ohne Rohrelement 14 und ohne Heizelement 16.

In Figur 3a ist die Oberseite des plattenförmigen Elements mit ihren entsprechenden Bohrungen dargestellt. Die Figuren 3b und 3c zeigen den Block 12 in zwei verschiedenen Seitenansichten.

In den Figuren 4, 5 und 6 sind jeweils Schnitte durch den Block 12 entlang der entsprechend markierten Linien A-A (Fig. 5), B-B (Fig. 4) und C-C (Fig. 6) gezeigt.

Wie insbesondere Fig. 6 zeigt, weist der Block 12 zwei parallel verlaufende Durchgänge 18 in Form von Längsbohrungen auf.

Auf der Oberseite 24 des Blocks 12 ist eine Reihe von Bohrungen zu verschiedenen Zwecken vorgesehen. Bei den Bohrungen handelt es sich teilweise um Befestigungsbohrungen 26 zur Befestigung der Heizelemente 16. Wie insbesondere Fig. 5 zeigt, gehen die Befestigungsbohrungen 26 durch den Block 12 hindurch.

Weiterhin weist der Block 12 Justierungsbohrungen 28 auf. Die Justierungsbohrungen 28 verlaufen, wie Fig. 4 zeigt, senkrecht zu den Durchgängen 18 und münden in den Durchgang 18.

Für die Herstellung der Heizvorrichtung 10 der Fig. 1 wird das Rohrelement 14 durch den Block 12 geschoben, indem die beiden Schenkel 20 durch die Durchgänge 18 durchgeführt werden. Zwischen der Innenwand des Durchgangs 18 und der Außenwand der Schenkel 20 des Rohrelements 14 wird eine Wärmeleitpaste eingefügt. Kleine Schrauben in Form von Madenschrauben werden in die Justierungsbohrungen 28 eingefügt, um das Rohrelement 14 gegen die Innenwand des Durchgangs 18 des Blocks 12 zu drücken.

Die Heizelemente 16 werden mittels der dafür vorgesehen Befestigungsbohrungen 26 auf den Block 12 geschraubt.

Wenn auch nicht dargestellt, ist eine Isoliervorrichtung vorgesehen, in der die Heizvorrichtung 10 eingebettet ist.

Bei einer nicht dargestellten Ausführungsform weist das Rohrelement Schenkel auf, die sich vom dem Basiselement in Art eines V nach außen erweitern bzw. bei einer anderen Ausführungsform nach innen zusammenlaufen. Anstelle des in der Ausführungsform dargestellten U-förmigen Basiselements können auch andere gebogene Formen für das Basiselementes verwendet werden, die geeignet sind, die beiden Schenkel des Rohrelements zu verbinden.

In der beschriebenen Ausführungsform wurde das Rohrelement 14 als einstückig dargestellt. Im Rahmen der Erfindung kann das Rohrelement 14 ebenso aus zwei oder mehreren Rohrstücken zusammengesetzt sein. Bevorzugt ist hierbei, dass die Verbindung zwischen den zwei oder mehreren Rohrstücken druckfest ist.

Im Einsatz erwärmen die Heizelemente 16 den Block 12. Der mittels der Heizelemente 16 erwärmte Block 12 überträgt die Wärme auf die Schenkel 20 des Rohrelements 14, so dass das durch die Schenkel 20 des Rohrelements 14 durchströmende Gas erwärmt wird.

Die Länge der Schenkel 20, die Dicke des Blocks 12, die Heizleistung und die Anzahl der Heizelemente sind so gewählt, dass das Gas nach Austritt aus der Heizvorrichtung 10 die gewünschte Temperatur aufweist.

Die Heizvorrichtung 10 ist bei einer Vielzahl verschiedener Vorrichtungen einsetzbar.

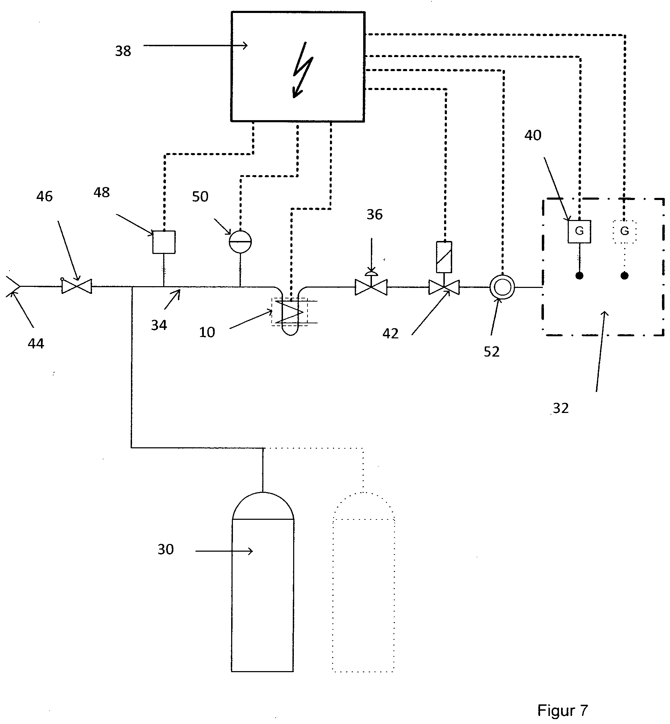

Eine bevorzugte Anwendung der Heizvorrichtung 10 ist der Einsatz in einer Vorrichtung zur Versorgung eines Schutzraumes mit Atemgas. Eine solche Vorrichtung ist in Fig. 7 gezeigt. Der Schutzraum ist hier eine Kabine 32 eines Baufahrzeuges. Das Baufahrzeug wird beispielsweise auf einer Baustelle eingesetzt, bei der die Umgebungsluft kontaminiert ist.

Ein Druckbehälter 30 ist über einen Rohrleitungsabschnitt 34 mit der Kabine 32 verbunden. Entlang des Rohrleitungsabschnitts 34, der den Druckbehälter 30 mit der Kabine 32 verbindet, sind in Strömungsrichtung des aus dem Druckbehälter 30 strömenden Gases die Heizvorrichtung 10, ein Druckreduzierventil 36 und ein Regelventil 42 vorgesehen.

Weiterhin ist eine Regeleinheit 38 vorgesehen, die mit verschiedenen Sensoren 40, 48, 50 und 52 verbunden ist, um das Regelventil 42 zu steuern.

Die in Figur 7 dargestellte Anlage wird mit einem oder mehreren Druckbehältern 30 auf einem oder mehreren Tragrahmen installiert. Die einzelnen Druckbehälter haben einen Nenninhalt von 10, 20, 50 oder 80 Liter.

Für das Füllen der Druckbehälter 30 sind weitere Druckgasflaschen, ein Booster-Kompressor oder wahlweise ein Kompressor erforderlich. Die Atemdruckluft muss gemäß EN 12021 aufbereitet sein. Diese Komponenten sind Stand der Technik.

Prinzipiell werden zwei Betriebszustände unterschieden. Der eine Betriebszustand ist das Füllen der Druckbehälter 30 und der andere Betriebszustand der Betrieb, in dem Gas, insbesondere Atemluft, in die Kabine 32 geführt wird.

Im Betriebszustand des Füllens der Druckbehälter 30 wird eine nicht dargestellte Fülleinrichtung wie etwa ein Kompressor über eine Füllkopplung mittels eines Füllnippels 44 an die Vorrichtung angeschlossen und dann gestartet. Während des Füllvorgangs ist die Vorrichtung spannungslos geschaltet und das Regelventil 42 ist geschlossen, der Luftdurchsatz ist damit gestoppt. Nach Erreichen des Enddrucks in den Druckbehältern 30 wird die Fülleinrichtung, beispielsweise ein Kompressor, abgeschaltet und die Füllkupplung vom Füllnippel 44 der Vorrichtung getrennt. Ein Rückschlagventil 46 verhindert, dass die eingefüllte Luft wieder über den Füllnippel entweicht.

Im Folgenden wird nun der Betriebszustand beschrieben, in dem Gas, insbesondere Atemluft, in die Kabine 32 geführt wird. Beim Einschalten der Vorrichtung wird Druckluft aus den Druckbehältern 30 entnommen. Die Luft strömt über die Heizvorrichtung 10 zum Druckreduzierventil 36. Im Druckreduzierventil 36 wird der Druck, je nach Voreinstellung, auf 1,5 bar bis 15 bar entspannt. Das Druckreduzierventil 36 regelt den eingestellten Hinterdruck unabhängig vom durchgesetzten Luftmassenstrom und hält diesen konstant.

Unter Hinterdruck ist hier der Druck am Austritt des Druckreduzierventils 36 zu verstehen.

Am Eintritt des Regelventils 42 herrscht der konstante Hinterdruck des Druckreduzierventils 36. Das Regelventil 42 sorgt durch die aktive Anpassung des Hubs für einen veränderten eingeblasenen Luftvolumenstrom und in Folge für eine konstante Gaskonzentration ohne Eingriff des Anwenders in der Kabine 32.

Zur Erfassung der Luftqualität in der Kabine 32 werden ein oder mehrere Gassensoren 40 installiert. Die Gassensoren 40 erfassen permanent die aktuelle Konzentration in der Kabine 32 und leiten diese an die Regeleinheit 38 weiter. Wird ein in der Regeleinheit 38 vorher definierter unterer Schwellenwert überschritten, erhöht sich die zugeführte Luftmenge in Abhängigkeit der Abweichung gleitend.

Das Regelventil 42 vergrößert daraufhin über die Regelung den Hub und es strömt eine höhere Luftmenge in die Kabine 32. Durch die höhere Luftmenge wird der Kabine 32 mehr Atemdruckluft zugeführt und die Luftqualität wird wieder innerhalb des zulässigen Toleranzbereiches zurückgeführt und gehalten. Dies geschieht unabhängig von der Anzahl der in der Kabine 32 befindlichen Personen.

Ist die Fluchtkabine 32 mit geringerer Personenzahl belegt als maximal zulässig, erhöht sich die Einsatzdauer dementsprechend. Für das Rettungspersonal bleibt dann mehr Zeit, Maßnahmen zu ergreifen bzw. eine Rettung durchzuführen.

Je nach Einsatzort der Kabine 32 kann zur Stromversorgung eine Batterie installiert werden, um bei einem Spannungsausfall im Stromnetz die Stromversorgung zu gewährleisten.

Bei Einsatz von zwei oder mehr Gassensoren 40 werden die Messwerte über die Regeleinheit 38 untereinander verglichen. Der Gassensor 40 mit dem ungünstigeren Messwert gibt den Sollwert für die zugeführte Luftmenge vor.

Nach Abschalten der Vorrichtung wird der Hauptstromkreis unterbrochen. Die Messung der Gassensoren 40 erfolgt dann über eine zeitabhängige oder permanente elektronische Selbsthaltung, gespeist über Batteriestrom oder eine externe Spannungsquelle. Die Regeleinheit 38 vergleicht nun den Messwert beim Ausschalten mit den nun folgenden Ist-Werten. Wenn innerhalb des vorgegebenen Zeitintervalls eine relative Änderung der Gaskonzentration im Verhältnis zum Messwert beim Abschalten der Vorrichtung feststellbar ist, wird eine Anzeige ausgelöst.

Die Ist-Werte von Sensoren für Druck 48 und Temperatur 50 sowie der Öffnungswinkel des Regelventils 42 werden permanent erfasst und an die Regeleinheit 38 übermittelt. Der aktuelle Ist-Luftdurchsatz kann auch mit Hilfe einer Luftmassenmesseinrichtung 52 ermittelt werden. Mit Hilfe eines Algorithmus wird die verbleibende Einsatzdauer der Anlage berechnet. Das Rechenergebnis ist ein Zeitwert, welcher dem Rettungspersonal optisch oder akustisch mitgeteilt werden kann. Die Übertragung kann mit Hilfe von W-LAN, Funk oder kabelgebunden erfolgen. Die Rettungskräfte können anhand der übermittelten Restlaufzeit bei mehreren Kabinen/Schutzräume 32 entscheiden, zu welcher Kabine/zu welchem Schutzraum sie zuerst vordringen müssen bzw. wie viele Personen sich ungefähr im Gefahrenbereich aufhalten.

Die dargestellte Ausführungsform einer Vorrichtung zur Versorgung eines Schutzraumes mit Gas, bei der die Heizvorrichtung 10 vor dem Druckreduzierventil 36 vorgesehen ist, eignet sich besonders zum Einsatz in unbeheizten Hallen, im Freien oder bei Kälte. Die Ist-Temperatur des Gases wird mittels des Temperatursensors 52 erfasst und an die Regeleinheit 38 übermittelt. Bei Unterschreiten eines Schwellenwertes werden ein oder mehrere PTC-Heizelemente 16 über die Regeeinrichtung 38, vorzugsweise in mehreren Stufen, eingeschaltet.

Mit anderen Worten, befindet sich die Vorrichtung zur Versorgung eines Schutzraumes in einer Umgebung mit einer niedrigen Außentemperatur, wird zunächst die Heizvorrichtung 10 in Betrieb genommen, um die in der Rohrleitung 34 befindliche Atemluft zu erwärmen. Aufgrund der Druckreduzierung am Druckreduzierventil 36 kühlt sich das Gas wieder ab. Das abgekühlte Gas beeinflusst die Temperatur am Druckreduzierventil 36.

Die Heizleistung der Heizvorrichtung 10 wird so gewählt, dass bei einer gegebenen Außentemperatur die Temperatur des entspannten Gases nicht unter einen Wert abfällt, der dazu führt, dass das Druckreduzierventil 36 vereist. Insbesondere wird das unter Druck stehende Gas auf eine solche Temperatur erwärmt, dass nach Durchgang des unter Druck stehenden Gases durch das Druckreduzierventil 36 die Temperatur des entspannten Gases 0° C nicht unterschreitet. Somit wird ein Vereisen des Druckreduzierventils 36 und des Regelventils 42 verhindert.

Die Kabine 32 kann als Schutzraum im Brand- oder Havariefall z. B. in Straßentunneln, Fabriken, Kraftwerken, Laboratorien und auf Bohrplattformen genutzt werden. Ferner kann die Kabine 32 die Funktion eines Aufenthaltsraumes besitzen, in dem Arbeiten verrichtet oder Ruhezeiten eingehalten werden.

Die beschriebene Vorrichtung zur Versorgung eines Schutzraumes mit Gas, insbesondere Atemgas, ist insbesondere dann einsetzbar, wenn die Umgebungsluft mit Schadstoffen belastet ist bzw. sein kann und bei ungeschütztem Atmen der Umgebungsluft ein Gesundheitsrisiko besteht.

## Patentansprüche

1. Heizvorrichtung geeignet für den Einsatz in Vorrichtungen zur Versorgung eines Schutzraumes mit Gas, insbesondere Atemgas, umfassend einen wärmeleitfähigen, im Wesentlichen plattenförmigen Block (12) mit zwei getrennt voneinander angeordneten Durchgängen (18) durch den Block (12), wobei jeder Durchgang (18) die Form einer Längsbohrung mit zwei Öffnungen aufweist, ein gebogenes Rohrelement (14) mit zwei Schenkeln (20), die im Wesentlichen in die gleiche Richtung weisen, wobei jeder Schenkel (20) in einem Durchgang (18) angeordnet ist, und wenigstens ein Heizelement (16), **dadurch gekennzeichnet, dass** das Heizelement auf der Oberfläche des plattenförmigen Blocks (12) angeordnet ist.

2. Heizvorrichtung nach Anspruch 1, **dadurch gekennzeichnet, dass** die beiden Durchgänge (18) im Wesentlichen parallel zueinander angeordnet sind.

3. Heizvorrichtung nach einem der vorhergehenden Ansprüche, **dadurch gekennzeichnet, dass** das Rohrelement (14) U-förmig gebogen ist.

4. Heizvorrichtung nach einem der vorhergehenden Ansprüche, **dadurch gekennzeichnet, dass** die Außendurchmesser der Schenkel (20) des Rohrelements (14) gleich oder geringfügig kleiner als der Durchmesser der Durchgänge (18) ist.

5. Heizvorrichtung nach einem der vorhergehenden Ansprüche, **dadurch gekennzeichnet, dass** das Rohrelement (14) druckfest ist.

6. Heizvorrichtung nach einem der vorhergehenden Ansprüche, **dadurch gekennzeichnet, dass** das Rohrelement (14) nahtlos ist.

7. Heizvorrichtung nach einem der Ansprüche 1 bis 5, **dadurch gekennzeichnet, dass** das Rohrelement wenigstens zwei Rohrstücke umfasst, die miteinander verbunden sind.

8. Heizvorrichtung nacheinem der vorhergehenden Ansprüche, **dadurch gekennzeichnet, dass** das Rohrelement (14) aus einen druckfesten Edelstahl und der Block (12) aus Metall, vorzugsweise aus Aluminium bestehen.

9. Heizvorrichtung nach einem der vorhergehenden Ansprüche, **dadurch gekennzeichnet, dass** zwischen den Schenkeln (20) des Rohrelements (14) und der Innenwandung des Durchgangs (18) wenigstens abschnittsweise eine Wärmeleitpaste vorgesehen ist.

10. Heizvorrichtung nach einem der vorhergehenden Ansprüche, **dadurch gekennzeichnet, dass** an wenigstens einem Durchgang (18) im Wesentlichen senkrecht zu dem wenigstens einen Durchgang (18) wenigstens eine Querbohrung (28) vorgesehen ist, die in den wenigstens einen Durchgang (18) mündet.

11. Heizvorrichtung nach einem der vorhergehenden Ansprüche, **dadurch gekennzeichnet, dass** das Heizelement (16) ein PTC-Heizelement ist.

12. Heizvorrichtung nach einem der vorhergehenden Ansprüche, **dadurch gekennzeichnet, dass** ein Isolierelement vorgesehen ist, in das die Heizvorrichtung (10) eingebettet ist.

13. Vorrichtung zur Versorgung eines Schutzraumes mit Gas, insbesondere Atemgas, umfassend eine Heizvorrichtung nach einem der Ansprüche 1 bis 12, einen Druckbehälter (30) mit Gas, insbesondere mit Atemgas, ein Druckreduzierventil (36) und Rohrleitungsabschnitte (34), die den Druckbehälter (30), die Heizvorrichtung (10), das Druckreduzierventil (36) und einen Schutzraum (32) miteinander verbinden, wobei die Heizvorrichtung (10) in Strömungsrichtung des Gases vor dem Druckreduzierventil (36) angeordnet ist.

14. Vorrichtung nach Anspruch 13, **dadurch gekennzeichnet, dass** eine Regeleinheit (38) und wenigstens ein Temperatursensor (50) vorgesehen ist.

15. Vorrichtung nach Anspruch 13 oder 14, **dadurch gekennzeichnet, dass** die Heizvorrichtung (10) so ausgelegt ist, dass die Temperatur des erwärmten, unter Druck stehenden Gases so hoch ist, dass die Temperatur des entspannten Gases nach Durchgang durch das Druckreduzierventil (36) zu keiner Vereisung des Druckreduzierventils (36) führt.

## Claims

1. Heating device suitable for use in devices for supplying a protective chamber with gas, in particular breathing gas, said heating device comprising a heat-conducting, substantially planar block (12) having two mutually separate passages (18) through the block (12), each passage (18) being in the shape of a longitudinal hole having two openings, said heating device comprising a curved tubular element (14) having two legs (20) that point substantially in the same direction, each leg (20) being arranged in a passage (18), and said heating device comprising at least one heating element (16), **characterised in that** the heating element is arranged on the surface of the planar block (12).

2. Heating device according to claim 1, **characterised in that** the two passages (18) are arranged substantially in parallel with one another.

3. Heating device according to any of the preceding claims, **characterised in that** the tubular element (14) is U-shaped.

4. Heating device according to any of the preceding claims, **characterised in that** the outer diameters of the legs (20) of the tubular element (14) are equal to or slightly less than the diameter of the passages (18).

5. Heating device according to any of the preceding claims, **characterised in that** the tubular element (14) is pressure-resistant.

6. Heating device according to any of the preceding claims, **characterised in that** the tubular element (14) is seamless.

7. Heating device according to any of claims 1 to 5, **characterised in that** the tubular element comprises at least two interconnected pipe pieces.

8. Heating device according to any of the preceding claims, **characterised in that** the tubular element (14) consists of a pressure-resistant high-grade steel, and the block (12) consists of metal, preferably aluminium.

9. Heating device according to any of the preceding claims, **characterised in that** a heat-conducting paste is provided at least in portions between the legs (20) of the tubular element (14) and the inner wall of the passage (18).

10. Heating device according to any of the preceding claims, **characterised in that** at least one transverse hole (28) is provided on at least one passage (18) substantially perpendicularly to the at least one passage (18), which hole opens into the at least one passage (18).

11. Heating device according to any of the preceding claims, **characterised in that** the heating element (16) is a PTC heating element.

12. Heating device according to any of the preceding claims, **characterised in that** an insulating element is provided in which the heating device (10) is embedded.

13. Device for supplying a protective chamber with gas, in particular breathing gas, comprising a heating device according to any of claims 1 to 12, a pressurised container (30) containing gas, in particular breathing gas, a pressure-reducing valve (36), and pipeline portions (34) that interconnect the pressurised container (30), the heating device (10), the pressure-reducing valve (36) and a protective chamber (32), wherein the heating device (10) is arranged upstream of the pressure-reducing valve (36) in the flow direction of the gas.

14. Device according to claim 13, **characterised in that** a controller (38) and at least one temperature sensor (50) are provided.

15. Device according to either claim 13 or claim 14, **characterised in that** the heating device (10) is designed such that the temperature of the heated, pressurised gas is sufficiently high that the temperature of the expanded gas after it has passed through the pressure-reducing valve (36) does not lead to the pressure-reducing valve (36) becoming iced.

## Revendications

1. Dispositif de chauffage convenant pour être utilisé dans des dispositifs destinés à alimenter en gaz un espace protégé, en particulier en gaz respiratoire, comprenant un bloc thermoconducteur (12), essentiellement en forme de plaque et doté de deux passages (18) traversant le bloc (12) et disposés séparément l'un de l'autre, sachant que chaque passage (18) présente la forme d'un perçage longitudinal ayant deux ouvertures, comprenant un élément tubulaire cintré (14) ayant deux branches (20) qui sont dirigées essentiellement dans la même direction, sachant que chaque branche (20) est disposée dans un passage (18), et comprenant au moins un élément chauffant (16), **caractérisé en ce que** l'élément chauffant (16) est disposé sur la face supérieure du bloc en forme de plaque (12).

2. Dispositif de chauffage selon la revendication 1, **caractérisé en ce que** les deux passages (18) sont disposés essentiellement parallèlement entre eux.

3. Dispositif de chauffage selon l'une des revendications précédentes, **caractérisé en ce que** l'élément tubulaire (14) est cintré en forme de U.

4. Dispositif de chauffage selon l'une des revendications précédentes, **caractérisé en ce que** le diamètre extérieur des branches (20) de l'élément tubulaire (14) est égal ou légèrement inférieur au diamètre des passages (18).

5. Dispositif de chauffage selon l'une des revendications précédentes, **caractérisé en ce que** l'élément tubulaire (14) est résistant à la pression.

6. Dispositif de chauffage selon l'une des revendications précédentes, **caractérisé en ce que** l'élément tubulaire (14) est dépourvu de discontinuité.

7. Dispositif de chauffage selon l'une des revendications 1 à 5, **caractérisé en ce que** l'élément tubulaire comprend au moins deux tronçons de tube qui sont reliés entre eux.

8. Dispositif de chauffage selon l'une des revendications précédentes, **caractérisé en ce que** l'élément tubulaire (14) est constitué d'un acier spécial résistant à la pression et le bloc (12) de métal, de préférence d'aluminium.

9. Dispositif de chauffage selon l'une des revendications précédentes, **caractérisé en ce qu'**une pâte thermoconductrice est prévue au moins par places entre les branches (20) de l'élément tubulaire (14) et la paroi intérieure du passage (18).

10. Dispositif de chauffage selon l'une des revendications précédentes, **caractérisé en ce qu'**au moins un perçage transversal (28) est prévu sur au moins un passage (18) essentiellement perpendiculairement au passage (18) au moins unique, perçage qui débouche dans le passage (18) au moins unique.

11. Dispositif de chauffage selon l'une des revendications précédentes, **caractérisé en ce que** l'élément chauffant (16) est un élément chauffant CTP (à coefficient de température positif).

12. Dispositif de chauffage selon l'une des revendications précédentes, **caractérisé en ce qu'**il est prévu un élément isolant dans lequel le dispositif de chauffage (10) est incorporé.

13. Dispositif pour alimenter en gaz un espace protégé, en particulier en gaz respiratoire, comprenant un dispositif de chauffage selon l'une des revendications 1 à 12, un récipient sous pression (30) contenant du gaz, en particulier du gaz respiratoire, un réducteur de pression (36) et des tronçons de conduite (34) qui relient entre eux le récipient sous pression (30), le dispositif de chauffage (10), le réducteur de pression (36) et un espace protégé (32), sachant que le dispositif de chauffage (10) est disposé, dans la direction d'écoulement du gaz, avant le réducteur de pression (36).

14. Dispositif selon la revendication 13, **caractérisé en ce qu'**il est prévu une unité de régulation (38) et au moins un capteur de température (50).

15. Dispositif selon la revendication 13 ou 14, **caractérisé en ce que** le dispositif de chauffage (10) est conçu de telle sorte que la température du gaz sous pression réchauffé est suffisamment élevée pour que la température du gaz détendu, à la suite de son passage à travers le réducteur de pression (36), ne provoque pas de givrage du réducteur de pression (36).
